# EUROPEAN PATENT SPECIFICATION

(11) **EP 2 592 677 B1**
(45) Date of publication and mention of the grant of the patent: **22.06.2016**
(21) Application number: 12192127.4
(22) Date of filing: 09.11.2012
(51) Int. Cl.: H01M 4/58, H01M 4/485, H01M 4/505, H01M 4/525, H01M 4/36, H01M 10/0525

(54) **Cathode active material for a lithium secondary battery containing phosphate fluoride and preparation method thereof**
Kathodenaktives Material für eine Lithium-Sekundärbatterie mit Phosphatfluorid und Herstellungsverfahren davon
Matériau actif de cathode pour une batterie secondaire au lithium contenant du fluorure de phosphate et son procédé de préparation

(30) Priority: 11.11.2011 KR 20110117804
(43) Date of publication of application: 15.05.2013
(73) Proprietor: FDG Kinetic (Chongqing) Lithium Ion Battery Materials Co., Ltd., Yubei District, Longxing Town Chongqing 401135 (CN)
(72) Inventor: RHO, Young-Ho, 305-759 Daejeon (KR); KIM, Hyung Mo, 448-533 Gyeonggi-do (KR); KIM, Byoung Soo, 448-712 Gyeonggi-do (KR); JANG, Jae Hyeok, 140-727 Seoul (KR); LEE, Jae Ryong, 331-818 Chungcheongnam-do (KR)
(74) Representative: Towler, Philip Dean

(56) References cited:
- US-A1- 2003 013 019
- US-A1- 2011 129 732
- LIAO X Z ET AL: "Effects of fluorine-substitution on the electrochemical behavior of LiFePO4/C cathode materials", JOURNAL OF POWER SOURCES, ELSEVIER SA, CH, vol. 174, no. 2, 6 December 2007 (2007-12-06), pages 720-725, XP025917632, ISSN: 0378-7753, DOI: 10.1016/J.JPOWSOUR.2007.06.146 [retrieved on 2007-12-06]
- ZHI-MING LIU ET AL: "Preparation of NaV1-xAlxPO4F cathode materials for application of sodium-ion battery", TRANSACTIONS OF NONFERROUS METALS SOCIETY OF CHINA, vol. 18, no. 2, 1 April 2008 (2008-04-01), pages 346-350, XP055050701, ISSN: 1003-6326, DOI: 10.1016/S1003-6326(08)60060-6

## Description

### FIELD OF THE INVENTION

The present invention relates to a cathode active material for a lithium secondary battery containing phosphate fluoride and a method for preparing the same.

### BACKGROUND OF THE INVENTION

As technologies for mobile appliances become more advanced and the demand for mobile appliances increases, there has been a rapid rise in the demand for secondary batteries as an energy source. Among such secondary batteries, lithium secondary batteries are commonly and widely used because they have a high energy density, a high operating voltage, a long lifecycle and a low self-discharge rate.

Typical lithium secondary batteries comprise LiPF₆ salts as an electrolyte. However, the LiPF₆ salts easily react with moisture, i.e., H₂O, in the atmosphere to form HF molecules, which sequentially react with the surface of cathode to release oxygen and elute transition metals, leading to a drastic reduction in the lifecycle of the battery. For such reason, the surfaces of cathodes have been coated with metal oxides that are stable but highly reactive with fluorine so as to prevent reaction between cathode active materials and HF and thus improve overall performance of the battery. Exemplary coating materials are oxide materials such as Al₂O₃, ZrO₂, ZnO, AlPO₄ and the like, and non-oxide materials such as AlF₃.

Also, phosphate or silicate materials have been employed as active materials in cathode due to their strong chemical bonding so as to prevent the release of oxygen and the side reaction with electrolytes during charging/discharging of the batteries, which stabilize their crystalline structures during charging or at high temperature. Exemplary active materials include LiFePO₄, Li₂FeSiO₄ and the like, particularly, LiFePO₄ has been commercially used in cathode active materials for power storage batteries due to its excellent stability.

However, although cathode active materials such as LiFePO₄ could significantly enhance stability of the batteries, their applications are limited due to low energy density, etc. Further, some electrochemically inactive materials such as Al₂O₃ and AlF₃ could improve the lifecycle of batteries but their effects on stability improvement are limited.

US 2011/0129732 discloses a cathode active material comprising a lithium metal oxide or a fluorophosphate or a combination thereof among other compounds.

### SUMMARY OF THE INVENTION

Accordingly, it is an object of the present invention to provide a cathode active material for a lithium secondary battery having improved lifecycle and stability and a method for preparing the same.

In accordance with one aspect of the present invention, there is provided a cathode active material for a lithium secondary battery containing the compound of Formula 1 which is further doped or coated with phosphate fluoride:

Formula 1 Liₐ Niₓ Co_{y} M'_{z} Mn_{(1-x-y-z)} O₂

wherein M' is selected from the group consisting of Ca, Mg, Al, Ti, Mn, Fe, Co, Ni, Cu, Zn, Y, Zr, Nb, B, and a combination thereof; and 0.4 < a ≤ 1.3, 0 ≤ x ≤ 0.8, 0 ≤ y ≤ 0.33, 0 ≤ z ≤ 0.33, and 0 ≤ x+y+z < 1.

In accordance with another aspect of the present invention, there is provided a method for preparing the cathode active material for a lithium secondary battery, comprising the steps of (a) mixing a lithium-containing compound with one or more precursors containing at least one of nickel, cobalt and manganese and (b) subjecting the resulting mixture to sintering and optional heat-treatment, wherein the sintering, the heat-treatment, or both are conducted after adding i) a fluorine (F)-containing compound and a phosphate (PO₄)-containing compound, or ii) a phosphate fluoride (PO₄F)-containing compound, to the mixture to be sintered or heat-treated so as to obtain the compound of Formula 1 above which is further doped or coated with phosphate fluoride.

The cathode active material for lithium secondary battery can improve performance of a lithium secondary battery as compared to conventional lithium secondary batteries due to its enhanced lifecycle and stability.

### BRIEF DESCRIPTION OF THE DRAWINGS

The above and other objects and features of the present invention will become apparent from the following description of the invention, when taken in conjunction with the accompanying drawings, which respectively show:
Fig. 1: the charge-discharge capacity of the lithium secondary battery using the cathode active material prepared in Example 1;
Fig. 2: the initial capacity of the lithium secondary battery using the cathode active material prepared in Example 1 depending on the amount of phosphate fluoride;
Fig. 3: the output of the lithium secondary battery using the cathode active material prepared in Example 1 when measured at 2C in percentage over the output at 0.1C depending on the amount of phosphate fluoride;
Fig. 4: the charge-discharge capacity of the lithium secondary battery using the cathode active material prepared in Example 2;
Fig. 5: the lifecycle property of the lithium secondary battery using the cathode active material prepared in Example 1 depending on the amount of phosphate fluoride;
Fig. 6: the lifecycle properties of the lithium secondary batteries using the cathode active materials prepared in Examples 1, 2 and Comparative Example 1, respectively; and
Fig. 7: the lifecycle properties at 60°C of the lithium secondary batteries using the cathode active materials prepared in Example 2 and Comparative Example 2, respectively.

### DETAILED DESCRIPTION OF THE INVENTION

The cathode active material of the present invention contains the compound of Formula 1 above which is further doped or coated with a phosphate fluoride.

The phosphate fluoride may be a metal phosphate fluoride, wherein the metal is selected from the group consisting of Ca, Mg, Al, Ti, Mn, Fe, Co, Ni, Cu, Zn, Y, Zr, Nb, B, and a combination thereof.

The cathode active material may be represented by Formula 2 below:

Formula 2 Liₐ Niₓ Co_{y} M'_{z} Mn_{(1-x-y-z)} O_{(2-p-q)} (M"PO₄Fᵣ)ₚ F_{q}

wherein M' and M" are each independently selected from the group consisting of Ca, Mg, Al, Ti, Mn, Fe, Co, Ni, Cu, Zn, Y, Zr, Nb, B, and a combination thereof. Preferably, M' and M" are each independently selected from the group consisting of Mg, Al, Mn, Fe, Co, Ni, and a combination thereof. More preferably, M' and M" are each independently selected from the group consisting of Mg and Al in order to improve lifecycle property and capacity of batteries.

In Formula 2, 0.4 < a ≤ 1.3, 0 ≤ x ≤ 0.8, 0 ≤ y ≤ 0.33, 0 ≤ z ≤ 0.33, 0 ≤ x+y+z < 1, 0 < p ≤ 0.5, 0 ≤ q ≤ 0.1, and r = 0 or 1. In one embodiment, 0.9 < a ≤ 1.2, 0.33 ≤ x ≤ 0.8, 0 ≤ y ≤ 0.3, 0 < z ≤ 0.3, 0.33 ≤ x+y+z < 1,0 < p ≤ 0.5, 0 ≤ q ≤ 0.01, and r = 1. In another embodiment, 0.9 < a ≤ 1.2, 0.33 ≤ x ≤ 0.8, 0 ≤ y ≤ 0.3, 0 ≤ z ≤ 0.3, 0.33 ≤ x+y+z < 1, 0 < p ≤ 0.01, 0 ≤ q ≤ 0.01, and r = 0 or 1. In a further embodiment, 0.4 < a ≤ 0.6, 0 ≤ x ≤ 0.25, 0 ≤ y ≤ 0.25, 0 < z ≤ 0.25, 0 ≤ x+y+z < 0.3, 0 < p ≤ 0.01, 0 ≤ q ≤ 0.01, and r = 1.

The cathode active material may have an average particle diameter of 3 to 20 µm. When the average diameter falls within the above range, lifecycle property and capacity of batteries can be more improved.

The present invention also provides a method for preparing a cathode active material for a lithium secondary battery.

The inventive method comprises the steps of (a) mixing a lithium-containing compound with one or more precursors containing at least one of nickel, cobalt and manganese and (b) subjecting the resulting mixture to sintering and optional heat-treatment, wherein the sintering, the heat-treatment, or the both are conducted after adding i) a fluorine (F)-containing compound and a phosphate (PO₄)-containing compound, or ii) a phosphate fluoride (PO₄F)-containing compound, to the mixture to be sintered or heat-treated so as to obtain the compound of Formula 1 above which is further doped or coated with phosphate fluoride.

The examples of the fluorine-containing compound comprise NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, polyvinylidene fluoride (PVdF), poly(vinylidene fluoride-co-hexafluoropropylene) (PVdF-HFP), and a mixture thereof. The examples of the phosphate-containing compound comprise NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, phosphorus trioxide, phosphorus pentoxide, and a mixture thereof. The examples of the phosphate fluoride-containing compound comprise PO₄F metal salts, wherein the metal is selected from the group consisting of Ca, Mg, Al, Ti, Mn, Fe, Co, Ni, Cu, Zn, Y, Zr, Nb, B, and a combination thereof.

Preferably, the compounds containing fluorine, phosphate or phosphate fluoride have an average particle diameter of less than 1µm in order to improve electrochemical properties.

Moreover, additional metals other than Li, Ni, Co, and Mn may be further employed during the sintering and/or heat-treatment process of step (b). Examples of the additional metal are Ca, Mg, Al, Ti, Mn, Fe, Co, Ni, Cu, Zn, Y, Zr, Nb, B, and a combination thereof. Such additional metals may be employed in the form of metal salts combined with fluorine, phosphate or phosphate fluoride, or in the form of metal salts such as nitrate, sulfate, and hydrochloride salts.

Each of said compounds may be added in an amount corresponding to the molar ratio of each element represented in Formula 1 or 2.

In the preparation method, the addition of the compound containing fluorine, phosphate or phosphate fluoride may be conducted by wet or dry process. The wet process allows homogeneous doping or coating of phosphate fluoride, and the dry process can yield locally inhomogeneous phosphate fluoride doping or coating.

In one embodiment of the mixing process, a fluorine-containing compound and/or a phosphate-containing compound are added during the mixing process of step (a), and the mixture is sintered to obtain a sintered powder containing fluorine and/or phosphate. After the sintering process, previously unused fluorine or phosphate compound may be added to the sintered powder. Further, the compounds containing metals other than Li, Ni, Co and Mn may be added to the sintered powder. Then, the powder is homogeneously mixed and heat-treated to obtain cathode active material powder which is doped or coated with phosphate fluoride.

In another embodiment of the mixing process, M"PO₄F-containing compound (wherein M" is the same as defined in Formula 2) or a mixture thereof is added after the sintering process, and then heat-treated to obtain cathode active material powder which is coated with phosphate fluoride on the surface thereof.

The sintering in step (b) may be conducted at 650 to 1000 °C for 4 to 24 hours under the condition of heating and cooling for 3 to 8 hours each. The heat-treatment in step (c) may be conducted at 300 to 900 °C for 2 to 8 hours under the condition of heating and cooling for 1 to 6 hours each.

In one embodiment, the cathode active material of the present invention is prepared by a method comprising the steps of: (a) mixing a precursor containing nickel, cobalt and manganese together with a lithium-containing compound, a fluorine (F)-containing compound and a phosphate (PO₄)-containing compound; and (b) sintering the mixture obtained in step (a) so as to obtain the compound of Formula 1 above which is further doped or coated with phosphate fluoride.

The fluorine-containing compound may be selected from the group consisting of NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, polyvinylidene fluoride, poly(vinylidene fluoride-co-hexafluoropropylene), and a mixture thereof. The phosphate-containing compound may be selected from the group consisting of NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, phosphorus trioxide, phosphorus pentoxide, and a mixture thereof.

The sintering in step (b) may be conducted at 650 to 1000 °C for 4 to 24 hours under the condition of heating and cooling for 3 to 8 hours each.

In another embodiment, the cathode active material of the present invention is prepared by a method comprising the steps of: (a) mixing a precursor containing nickel, cobalt and manganese together with a lithium-containing compound and a fluorine (F)-containing compound; (b) sintering the mixture obtained in step (a), followed by mixing the sintered mixture with a phosphate (PO₄)-containing compound or a phosphate fluoride (PO₄F)-containing compound; and (c) subjecting the mixture obtained in step (b) to heat-treatment so as to obtain the compound of Formula 1 above which is further doped or coated with phosphate fluoride.

The fluorine-containing compound may be selected from the group consisting of NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, polyvinylidene fluoride, poly(vinylidene fluoride-co-hexafluoropropylene), and a mixture thereof. The phosphate-containing compound may be selected from the group consisting of NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, phosphorus trioxide, phosphorus pentoxide, and a mixture thereof. The phosphate fluoride-containing compound may be a PO₄F metal salt, the metal being selected from the group consisting of Ca, Mg, Al, Ti, Mn, Fe, Co, Ni, Cu, Zn, Y, Zr, Nb, B, and a combination thereof

The mixing in step (b) may be conducted by wet or dry process.

The sintering in step (b) may be conducted at 650 to 1000 °C for 4 to 24 hours under the condition of heating and cooling for 3 to 8 hours each. The heat-treatment in step (c) may be conducted at 300 to 900 °C for 2 to 8 hours under the condition of heating and cooling for 1 to 6 hours each.

The precursor which is used as a starting material in the inventive method, may be in the form of a mixture of a nickel salt, a cobalt salt, a manganese salt, and/or other metal salts.

The precursor may also be a nickel-cobalt-manganese hydroxide represented by Formula 3:

Formula 3 Niₓ Co_{y} Mn_{(1-x-y)} (OH)₂

wherein 0 ≤ x ≤ 0.8, 0 ≤ y ≤ 0.33, and 0 ≤ x+y < 1.

The compound of Formula 3 may be prepared by co-precipitation or spray-drying method.

In one embodiment of preparing the compound of Formula 3 by employing the co-precipitation method, a nickel salt, a cobalt salt and a manganese salt, e.g., nitrate, sulfate, hydrochloride, are mixed in a desired molar ratio, and then dissolved in distilled water. The resulting solution is poured into a continuous reactor or a Couette-Taylor reactor at a flow rate of 150-300 mL/hr. At the same time, 20-30% aqueous NH₄OH solution is poured into the reactor at a flow rate of 30-50 mL/hr. And then, 30-50% aqueous NaOH solution is poured into the reactor to maintain a pH range of 10-13. The reaction mixture is stirred at 600-900 rpm to prepare the cathode active material precursor. Finally, the resulting solution is washed with distilled water to remove Na and S which are contained in the solution, and then dried to obtain the final precursor particles.

In another embodiment of preparing the compound of Formula 3 by employing the spray-drying method, a lithium salt, a nickel salt, a cobalt salt and a manganese salt, e.g., oxide, carbonate, sulphate, nitrate, hydrochloride, are mixed in a desired molar ratio, and then the mixture is poured into distilled water or alcohol-based solvent to form a slurry having a solid content of 20-50%. The slurry is subjected to a grinding process using a ball mill or a bead mill until the average diameter of the solid content becomes 0.5-1 µm, and then mixed with a binder. The mixture is dried using a spray-dryer to obtain the final product in the form of agglomerated secondary particles. The binder may be added before or after the grinding process, but usually it may be added after the grinding process.

Further, the present invention provides a lithium secondary battery comprising a lithium anode, an electrolyte, and a cathode containing the inventive cathode active material.

As described above, the cathode active material in accordance with the present invention can enhance electrical properties of a lithium secondary battery such as capacity, output power and the like, and improve lifecycle as well as thermal stability thereof.

In particular, a lithium secondary battery containing the inventive cathode active material can show an improved charge-discharge property, e.g., an increase of 4% or more in the initial capacity when measured at 3.0-4.3 V charge-discharge cut-off voltage, and also maintain 99% or more of normalized capacity even after 50 cycles during the lifecycle test.

The following examples are intended to further illustrate the present invention without limiting its scope.

### Preparation Example 1: Preparation of cathode active material precursor (Ni:Co:Mn = 6:2:2)

NiSO₄·6H₂O, CoSO₄·7H₂O and MnSO₄·H₂O were mixed at a molar ratio of 6:2:2, and N₂-purged distilled water was added thereto to prepare 2M metal salt solution. The metal salt solution was poured into a continuous stirred-tank reactor (CSTR) at a flow rate of 250 mL/hr.

25% aqueous ammonia solution was poured into the reactor at a flow rate of 40 mL/hr through an inlet for aqueous ammonia solution. Further, 40% aqueous NaOH solution was automatically poured into the reactor at a flow rate of 105-120 mL/hr through an inlet for NaOH solution while maintaining the pH to be 11.3 using a pH meter and a controller. The temperature of the reactor was set at 40°C, the retention time (RT) was controlled to 10 hr, and the mixed solution was stirred at 800 rpm.

The reaction mixture obtained was filtered, purified with distilled water, and dried to obtain nickel-cobalt-manganese hydroxide particles (Ni:Co:Mn = 6:2:2).

### Preparation Example 2: Preparation of cathode active material precursor (Ni:Co:Mn = 7:1:2)

NiSO₄·6H₂O, CoSO₄·7H₂O and MnSO₄·H₂O were mixed at a molar ratio of 7:1:2, and N₂-purged distilled water was added thereto to prepare 2M metal salt solution. The metal salt solution was poured into a Couette-Taylor reactor having 1L capacity at a flow rate of 200 mL/hr through an inlet for metal salt solution.

25% aqueous ammonia solution was poured into the reactor at a flow rate of 35 mL/hr through an inlet for aqueous ammonia solution. Further, 40% aqueous NaOH solution was automatically poured into the reactor at a flow rate of 85-100 mL/hr through an inlet for NaOH solution while maintaining the pH to be 11.2 using a pH meter and a controller. The temperature of the reactor was set at 40°C, the retention time (RT) was controlled to 3 hr, and the mixed solution was stirred at 600 rpm.

The reaction mixture obtained was filtered, purified with distilled water, and dried to obtain nickel-cobalt-manganese hydroxide particles (Ni:Co:Mn = 7:1:2).

### Example 1: Preparation of cathode active material

Li₂CO₃ powder, LiF powder, and Mn₃(PO₄)₂ powder were added to the nickel-cobalt-manganese hydroxide (Ni:Co:Mn = 6:2:2) powder obtained in Preparation Example 1 so as to allow a molar ratio of Li₂CO₃ : LiF : Mn₃(PO₄)₂ : Ni-Co-Mn-OH = 0.52 : 0.02 : 0.025-0.2 : 1, and then homogeneously mixed.

The mixed powder was sintered at 870°C for 12 hours under the condition of heating and cooling for 6 hours each to obtain the cathode active material having the formula of Li_{1.06} Ni_{0.6} Co_{0.2} Mn_{0.2} O₂₋ₓ (MnPO₄F)ₓ (x = 0.05-0.4).

### Example 2: Preparation of cathode active material

Li₂CO₃ powder, LiF powder, and Al₂O₃ powder (Aldrich Co.) were added to the nickel-cobalt-manganese hydroxide (Ni:Co:Mn = 7:1:2) powder obtained in Preparation Example 2 so as to allow a molar ratio of Li₂CO₃ : LiF : Al₂O₃ : Ni-Co-Mn-OH = 0.52 : 0.02 : 0.01 : 1, and then homogeneously mixed.

The mixed powder was sintered at 870°C for 12 hours under the condition of heating and cooling for 6 hours each.

Diammonium phosphate ((NH₄)₂HPO₄, Aldrich Co.) powder was added to the sintered powder in an amount of 0.01 mole per 1 mol of the sintered powder, and then homogeneously mixed.

The mixed powder was subjected to heat-treatment at 400°C for 3 hours under the condition of heating and cooling for 1.5 hours each to obtain the cathode active material having the formula of Li_{1.06} Ni_{0.7} Co_{0.1} Al_{0.01} Mn_{0.19} O_{1.99} (AlPO₄F)_{0.01}.

### Example 3: Preparation of cathode active material

Li₂CO₃, LiF, MnO₂, Al(OH)₃, MgCO₃, and H₃BO₃ were mixed in a molar ratio of 0.260 : 0.010 : 0.885 : 0.050 : 0.060 : 0.005, followed by mixing with water to form a slurry having a solid content of 30 wt%.

Polyacrylic acid (PAA) was added as a binder to the slurry in an amount of 0.1 wt%, based on 100 g of the solid content of the slurry, and the slurry was subjected to a wet-grinding process using a bead mill (MiniCer, Netzsch Co.) The slurry was then subjected to a spray-drying process using a spray dryer (Mobile MINOR, GEA-NIRO Co.) with the inlet and outlet temperatures of 240°C and 100°C, respectively, to obtain powder in the form of agglomerated secondary particles.

The powder was then sintered at 850°C in the air for 8 hours.

Magnesium phosphate (MgHPO₄, Aldrich Co.) powder was added to the sintered powder in an amount of 0.01 mole per 1 mole of the sintered powder, and then wet-blended using a solvent of alcohol.

The mixed powder was subjected to heat-treatment at 500°C for 3 hours under the condition of heating and cooling for 1.5 hours each to obtain the cathode active material having the formula of Li_{0.52} Mn_{0.885} Al_{0.05} Mg_{0.06} B_{0.005} O_{1.99} (MgPO₄F)_{0.01}.

### Comparative Example 1: Preparation of cathode active material

Li₂CO₃ powder was added to the nickel-cobalt-manganese hydroxide (Ni:Co:Mn = 6:2:2) powder obtained in Preparation Example 1 so as to allow a molar ratio of Li₂CO₃ : Ni-Co-Mn-OH = 0.53 : 1, and then homogeneously mixed.

The mixed powder was sintered at 870°C for 12 hours under the condition of heating and cooling for 6 hours each to obtain the cathode active material having the formula of Li_{1.06} Ni_{0.6} Co_{0.2} Mn_{0.2} O₂.

### Comparative Example 2: Preparation of cathode active material

Li₂CO₃, MnO₂, Al(OH)₃, MgCO₃, and H₃BO₃ were mixed in a molar ratio of 0.520 : 1.885 : 0.050 : 0.060 : 0.005, followed by mixing with water to form a slurry having a solid content of 30 wt%.

Polyacrylic acid (PAA) was added as a binder to the slurry in an amount of 0.1 wt% based on 100g of the solid content of the slurry, and the slurry was subjected to a wet-grinding process using a bead mill (MiniCer, Netzsch Co.)

The resulting slurry was then subjected to a spray-drying process using a spray dryer (Mobile MINOR, GEA-NIRO Co.) with the inlet and outlet temperatures of 240°C and 100°C, respectively, to obtain powder in the form of agglomerated secondary particle.

The resulting powder was sintered at 850°C in the air for 8 hours to obtain the cathode active material having the formula of Li_{0.52} Mn_{0.9425} Al_{0.025} Mg_{0.03} B_{0.0025} O₂.

### Example 4: Preparation of lithium secondary battery

Each of the cathode active materials prepared in Examples 1 to 3 and Comparative Examples 1 and 2 was mixed with a binder (PVdF, Kureha Co.) and a conducting material (Super P, Timcal Co.) in a weight ratio of 95 : 2 : 3 to obtain a slurry. The slurry was coated on A1 foil by doctor blade method to obtain a cathode. Lithium metal was used as an anode, which was loaded in an amount of 12 mg/cm². 1M LiPF₆ in EC/DMC (1:2) was used as an electrolyte. A separator was disposed between the anode and the cathode to prepare a lithium secondary battery.

### Test Example 1: Evaluation of charge-discharge capacity

The charge-discharge capacities of lithium secondary batteries using the cathode active materials prepared in Examples 1 to 3 and Comparative Examples 1 and 2 were evaluated. The evaluation was performed at the charge/discharge cut-off voltages set to 3.0-4.3 V, and under the condition of 0.2C, 0.5C, 1C, 2C and 3C after initial charge/discharge at 0.1C at room temperature. 1C capacity was measured based on 140 mAh/g for Examples 1, 2 and Comparative Example 1, and 100 mAh/g for Example 3 and Comparative Example 2, respectively.

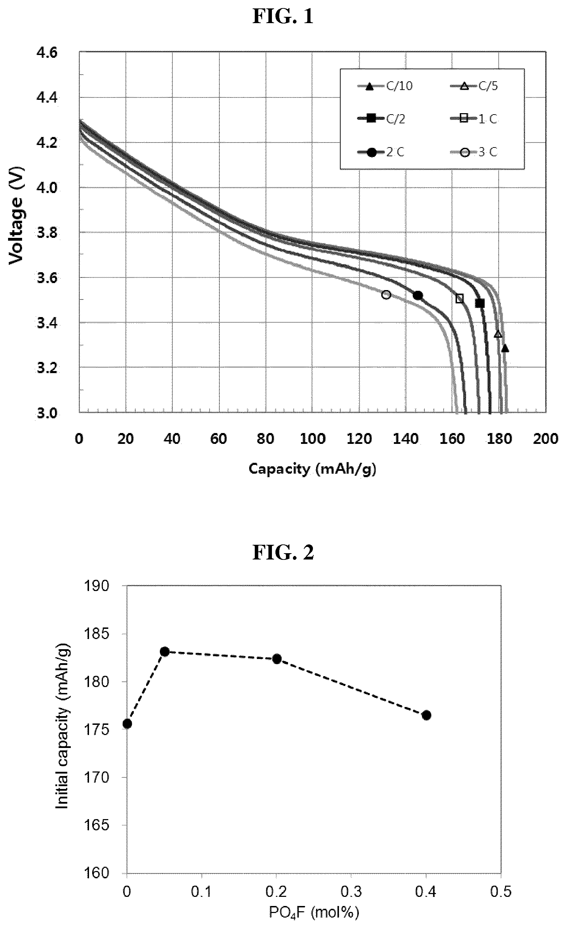

Fig. 1 shows the result of the charge-discharge capacity test of the lithium secondary batteries using the cathode active material prepared in Example 1. As can be seen from Fig. 1, no deterioration in capacity due to the phosphate fluoride content was observed, whereas the output was significantly improved.

Fig. 2 shows the result of the initial capacity test of the lithium secondary battery using the cathode active material prepared in Example 1 depending on amount of phosphate fluoride. As shown in Fig. 2, although the capacity has a tendency to decrease as the amount of phosphate fluoride increases, the capacity was still higher as compared to that of Comparative Example 1.

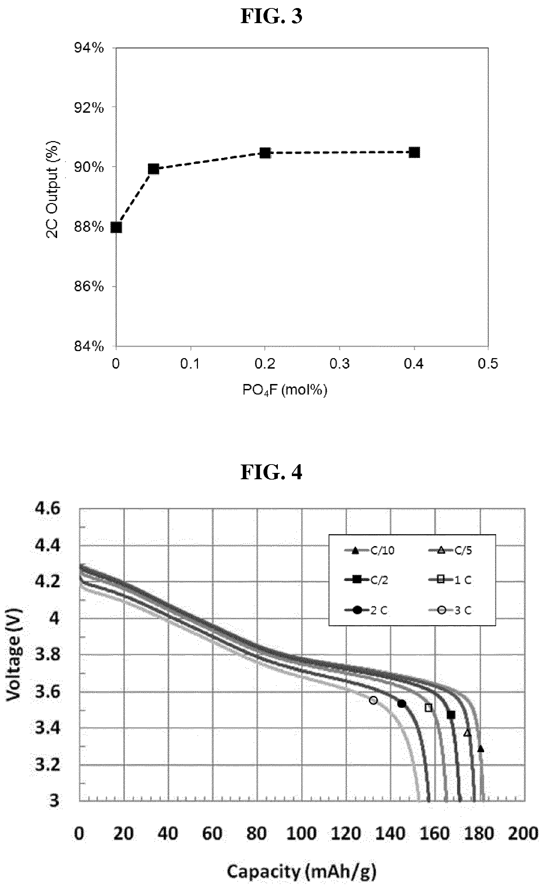

Fig. 3 shows the result of the output test of the lithium secondary battery using the cathode active material prepared in Example 1 when measured at 2C in percentage over the output at 0.1C depending on the amount of phosphate fluoride. As can be seen from Fig. 3, depending on the output property increased as the amount of phosphate fluoride increased and the graph converged at the value of 0.2 mol% or more.

Fig. 4 shows the result of the initial charge-discharge capacity test of the lithium secondary battery using the cathode active material prepared in Example 2. As shown in Fig. 4, the initial capacity and output properties are excellent.

### Test Example 2: Evaluation of lifecycle properties

The lifecycle properties of lithium secondary batteries using the cathode active materials prepared in Examples 1 to 3 and Comparative Examples 1 and 2 were evaluated. 1C capacity was measured based on 140 mAh/g at room temperature or 60°C and at the charge/discharge cut-off voltages of 3.0-4.3 V.

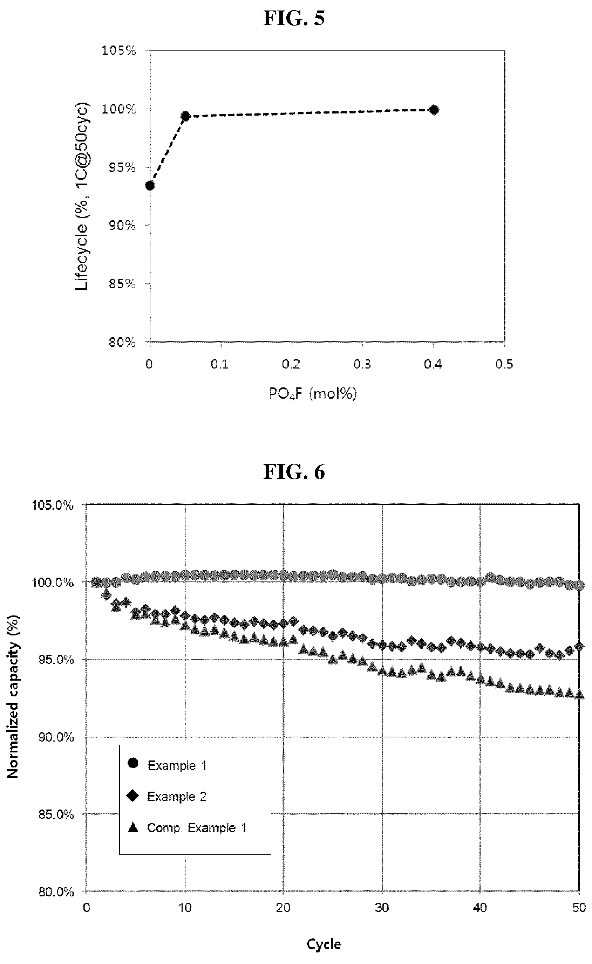

Fig. 5 shows the result of the lifecycle property after 50 cycles of the lithium secondary battery using the cathode active material prepared in Example 1 depending on the amount of phosphate fluoride. It was observed that the lifecycle property significantly increased as the amount of phosphate fluoride increased.

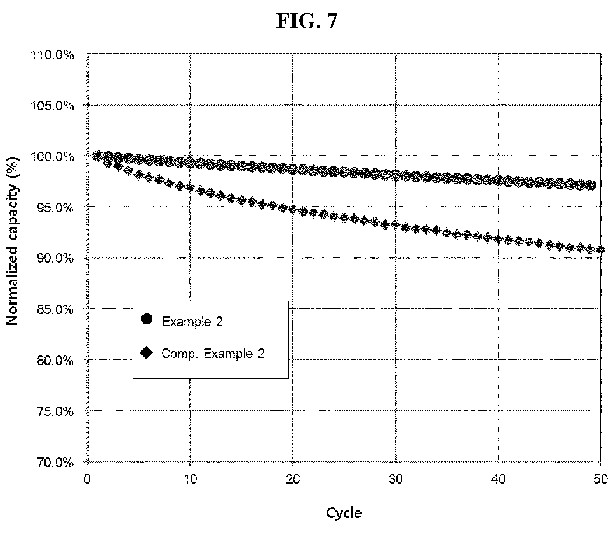

Fig. 6 shows the result of the lifecycle properties of the lithium secondary batteries using the cathode active materials prepared in Examples 1, 2 and Comparative Example 1, respectively. Fig. 7 shows the result of the lifecycle properties at 60°C of the lithium secondary batteries using the cathode active materials prepared in Example 2 and Comparative Example 2, respectively. As shown in Figs. 6 and 7, the batteries using the cathode active materials in accordance with the present invention maintained the capacity of 95% or more as time went by, whereas the batteries using the cathode active materials prepared in Comparative Example 2, a conventional manner, resulted the capacity of less than 95% as time went by.

## Claims

1. A cathode active material for a lithium secondary battery comprising the compound of Formula 1 which is further doped or coated with a phosphate fluoride:
Formula 1 Liₐ Niₓ Co_{y} M'_{z} Mn_{(1-x-y-z)} O₂
wherein M' is selected from the group consisting of Ca, Mg, Al, Ti, Mn, Fe, Co, Ni, Cu, Zn, Y, Zr, Nb, B, and a combination thereof; and 0.4 < a ≤ 1.3, 0 ≤ x < 0.8, 0 ≤ y ≤ 0.33, 0 ≤ z ≤ 0.33, and 0 ≤ x+y+z < 1.

2. The cathode active material of claim 1, which is represented by Formula 2:
Formula 2 Liₐ Niₓ Co_{y} M'_{z} Mn_{(1-x-y-z)} O_{(2-p-q)} (M"PO₄Fᵣ)ₚ F_{q}
wherein M' and M" are each independently selected from the group consisting of Ca, Mg, Al, Ti, Mn, Fe, Co, Ni, Cu, Zn, Y, Zr, Nb, B, and a combination thereof; and 0.4 < a ≤ 1.3, 0 ≤ x ≤ 0.8, 0 ≤ y ≤ 0.33, 0 ≤ z ≤ 0.33, 0 ≤ x+y+z < 1, 0 < p ≤ 0.5, 0 ≤ q ≤ 0.1, and r = 1.

3. The cathode active material of claim 2, wherein M' and M" are each independently selected from the group consisting of Mg, Al, Mn, Fe, Co, Ni, B, and a combination thereof.

4. The cathode active material of claim 2 or claim 3, wherein 0.9 < a ≤ 1.2, 0.33 ≤ x ≤ 0.8, 0 ≤ y ≤ 0.3, 0 < z ≤ 0.3, 0.33 ≤ x+y+z < 1, 0 < p ≤ 0.01, 0 ≤ q ≤ 0.01, and r = 1.

5. The cathode active material of claim 2 or claim 3, wherein 0.4 < a ≤ 0.6, 0 ≤ x ≤ 0.25, 0 ≤ y ≤ 0.25, 0 < z ≤ 0.25, 0 ≤ x+y+z < 0.3, 0 < p ≤ 0.01, 0 ≤ q ≤ 0.01, and r = 1.

6. A method for preparing the cathode active material as defined in any of claims 1 to 5, comprising the steps of:
(a) mixing a precursor containing nickel, cobalt and manganese together with a lithium-containing compound, a fluorine (F)-containing compound and a phosphate (PO₄)-containing compound; and
(b) sintering the mixture obtained in step (a) so as to obtain the cathode active material.

7. The method of claim 6, wherein
the fluorine-containing compound is selected from the group consisting of NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, polyvinylidene fluoride, poly(vinylidene fluoride-co-hexafluoropropylene), and a mixture thereof; and
the phosphate-containing compound is selected from the group consisting of NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, phosphorus trioxide, phosphorus pentoxide, and a mixture thereof.

8. The method of claim 6 or claim 7, wherein the sintering in step (b) is conducted at 650 to 1000 °C for 4 to 24 hours under the condition of heating and cooling for 3 to 8 hours each.

9. A method for preparing the cathode active material as defined in any of claims 1 to 5, comprising the steps of:
(a) mixing a precursor containing nickel, cobalt and manganese together with a lithium-containing compound and a fluorine (F)-containing compound;
(b) sintering the mixture obtained in step (a), followed by mixing the sintered mixture with a phosphate (PO₄)-containing compound or a phosphate fluoride (PO₄F)-containing compound; and
(c) subjecting the mixture obtained in step (b) to heat-treatment so as to obtain the cathode active material.

10. The method of claim 9, wherein
the fluorine-containing compound is selected from the group consisting of NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, polyvinylidene fluoride, poly(vinylidene fluoride-co-hexafluoropropylene), and a mixture thereof;
the phosphate-containing compound is selected from the group consisting of NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, phosphorus trioxide, phosphorus pentoxide, and a mixture thereof; and
the phosphate fluoride-containing compound is a PO₄F metal salt, the metal being selected from the group consisting of Ca, Mg, Al, Ti, Mn, Fe, Co, Ni, Cu, Zn, Y, Zr, Nb, B, and a combination thereof.

11. The method of claim 9 or claim 10, wherein the mixing in step (b) is conducted by a wet or dry process.

12. The method of claim 9 or claim 10, wherein
the sintering in step (b) is conducted at 650 to 1000 °C for 4 to 24 hours under the condition of heating and cooling for 3 to 8 hours each; and
the heat-treatment in step (c) is conducted at 300 to 900 °C for 2 to 8 hours under the condition of heating and cooling for 1 to 6 hours each.

13. A lithium secondary battery comprising a lithium anode, an electrolyte, and a cathode containing the cathode active material as defined in any one of claims 1 to 5.

## Patentansprüche

1. Kathodenaktives Material für eine Lithium-Sekundärbatterie, aufweisend die Verbindung der Formel 1, die ferner mit einem Phosphatfluorid dotiert oder umhüllt ist:
Formel 1 Liₐ Niₓ Co_{y} M'_{z} Mn_{(1-x-y-z)} O₂
wobei M' ausgewählt ist aus der Gruppe bestehend aus Ca, Mg, Al, Ti, Mn, Fe, Co, Ni, Cu, Zn, Y, Zr, Nb, B, und einer Kombination daraus; und 0,4 < a ≤ 1,3, 0 ≤ x ≤ 0,8, 0 ≤ y ≤ 0,33, 0 ≤ z ≤ 0,33, und 0 ≤ x+y+z < 1.

2. Kathodenaktives Material nach Anspruch 1, das dargestellt ist durch
Formel 2: Liₐ Niₓ Co_{y} M'_{z} Mn_{(1-x-y-z)} O_{(2-p-q)} (M"PO₄Fᵣ)ₚ F_{q}
wobei M' und M" jeweils unabhängig ausgewählt sind aus der Gruppe bestehend aus Ca, Mg, Al, Ti, Mn, Fe, Co, Ni, Cu, Zn, Y, Zr, Nb, B, und einer Kombination daraus; und 0,4 < a ≤ 1,3, 0 ≤ x ≤ 0,8, 0 ≤ y ≤ 0,33, 0 ≤ z ≤ 0,33, 0 ≤ x+y+z ≤ 1, 0 < p ≤ 0,5, 0 ≤ q ≤ 0,1, und r = 1.

3. Kathodenaktives Material nach Anspruch 2, wobei M' und M" jeweils unabhängig ausgewählt sind aus der Gruppe bestehend aus Mg, Al, Mn, Fe, Co, Ni, B, und einer Kombination daraus.

4. Kathodenaktives Material nach Anspruch 2 oder Anspruch 3, wobei 0,9 < a ≤ 1,2, 0,33 ≤ x ≤ 0,8, 0 ≤ y ≤ 0,3, 0 < z ≤ 0,3, 0,33 ≤ x+y+z < 1, 0 < p ≤ 0,01, 0 ≤ q ≤ 0,01, und r = 1.

5. Kathodenaktives Material nach Anspruch 2 oder Anspruch 3, wobei 0,4 < a ≤ 0,6, 0 ≤ x ≤ 0,25, 0 ≤ y ≤ 0,25, 0 < z ≤ 0,25, 0 ≤ x+y+z < 0,3, 0 < p ≤ 0,01, 0 ≤ q ≤ 0,01, und r = 1.

6. Verfahren zur Herstellung des in einem der Ansprüche 1 bis 5 definierten kathodenaktiven Materials, aufweisend die Schritte:
(a) Mischen eines Ausgangsstoffes, der Nickel, Kobalt und Mangan zusammen mit einer lithiumhaltigen Verbindung, einer Fluor (F)-haltigen Verbindung und einer Phosphat (PO₄)-haltigen Verbindung enthält; und
(b) Sintern der in Schritt (a) erhaltenen Mischung, so dass man das kathodenaktive Material erhält.

7. Verfahren nach Anspruch 6, wobei
die fluorhaltige Verbindung ausgewählt ist aus der Gruppe bestehend aus NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, Polyvinylidenfluorid, Poly(vinylidenfluorid-co-hexafluorpropylenfluorid), und einer Mischung daraus; und
die phosphathaltige Verbindung ausgewählt ist aus der Gruppe bestehend aus NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, Phosphortrioxid, Phosphorpentoxid, und einer Mischung daraus.

8. Verfahren nach Anspruch 6 oder Anspruch 7, wobei das Sintern in Schritt (b) bei 650 bis 1000 °C für 4 bis 24 Stunden unter der Bedingung des jeweils 3 bis 8- stündigen Heizens und Kühlens durchgeführt wird.

9. Verfahren zur Herstellung des in einem der Ansprüche 1 bis 5 definierten kathodenaktiven Materials, aufweisend die Schritte:
(a) Mischen eines Ausgangsstoffes, der Nickel, Kobalt und Mangan zusammen mit einer lithiumhaltigen Verbindung und einer Fluor (F)-haltigen Verbindung enthält;
(b) Sintern der in Schritt (a) erhaltenen Mischung, gefolgt vom Mischen der gesinterten Mischung mit einer Phosphat (PO₄)-haltigen Verbindung oder einer Phosphatfluor (PO₄F)-haltigen Verbindung; und
(c) Aussetzen der in Schritt (b) erhaltenen Mischung einer Hitzebehandlung, so dass man das kathodenaktive Material erhält.

10. Verfahren nach Anspruch 9, wobei
die fluorhaltige Verbindung ausgewählt ist aus der Gruppe bestehend aus NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, Polyvinylidenfluorid, Poly(vinylidenfluorid-cohexafluorpropylenfluorid), und einer Mischung daraus;
die phosphathaltige Verbindung ausgewählt ist aus der Gruppe bestehend aus NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, Phosphortrioxid, Phosphorpentoxid, und einer Mischung daraus; und
die phosphatfluorhaltige Verbindung ein PO₄F- Metallsalz ist, wobei das Metall ausgewählt ist aus der Gruppe bestehend aus Ca, Mg, Al, Ti, Mn, Fe, Co, Ni, Cu, Zn, Y, Zr, Nb, B, und einer Kombination daraus.

11. Verfahren nach Anspruch 9 oder Anspruch 10, wobei das Mischen in Schritt (b) als ein nasser oder trockener Prozess durchgeführt wird.

12. Verfahren nach Anspruch 9 oder Anspruch 10, wobei
das Sintern in Schritt (b) bei 650 bis 1000 °C für 4 bis 24 Stunden unter der Bedingung des jeweils 3 bis 8- stündigen Heizens und Kühlens durchgeführt wird; und
die Hitzebehandlung in Schritt (c) bei 300 bis 900 °C für 2 bis 8 Stunden unter der Bedingung des jeweils 1 bis 6- stündigen Heizens und Kühlens durchgeführt wird.

13. Lithium-Sekundärbatterie, aufweisend eine Lithiumanode, einen Elektrolyten, und eine Kathode, die das wie in einem der Ansprüche 1 bis 5 definierte kathodenaktive Material enthält.

## Revendications

1. Matière active de cathode pour une batterie rechargeable au lithium comprenant le composé de Formule 1 qui est en outre dopé ou revêtu d'un fluorure de phosphate :
Formule 1 Liₐ Niₓ Co_{y} M'_{z} Mn _{(1-x-y-z)} O₂
dans laquelle M' est sélectionné à partir du groupe constitué par Ca, Mg, Al, Ti, Mn, Fe, Co, Ni, Cu, Zn, Y, Zr, Nb, B et une combinaison de ceux-ci ; et 0,4 < a ≤ 1,3, 0 ≤ x ≤ 0,8, 0 ≤ y ≤ 0,33, 0 ≤ z ≤ 0,33, et 0 ≤ x+y+z < 1.

2. Matière active de cathode selon la revendication 1, qui est représentée par la Formule 2 :
Formule 2 Liₐ Niₓ Co_{y} M'_{z} Mn_{(1-x-y-z)} O_{(2-p-q)} (M"PO₄Fᵣ)ₚF_{q}
dans laquelle M' et M" sont chacun indépendamment sélectionnés à partir du groupe constitué par Ca, Mg, Al, Ti, Mn, Fe, Co, Ni, Cu, Zn, Y, Zr, Nb, B et une combinaison de ceux-ci ; et 0,4 < a ≤ 1,3, 0 ≤ x ≤ 0,8, 0 ≤ y ≤ 0,33, 0 ≤ z ≤ 0,33, 0 ≤ x+y+z < 1,0 < p ≤ 0,5, 0 ≤ q ≤ 0,1, et r = 1.

3. Matière active de cathode selon la revendication 2, dans laquelle M' et M" sont chacun indépendamment sélectionnés à partir du groupe constitué par Mg, Al, Mn, Fe, Co, Ni, B et une combinaison de ceux-ci.

4. Matière active de cathode selon la revendication 2 ou la revendication 3, dans laquelle 0,9 < a ≤ 1,2, 0,33 ≤ x ≤ 0,8, 0 ≤ y ≤ 0,3, 0 ≤ z ≤ 0,3, 0,33 ≤ x+y+z < 1, 0 < p ≤ 0,01, 0 ≤ q ≤ 0,01, et r = 1.

5. Matière active de cathode selon la revendication 2 ou la revendication 3, dans laquelle 0,4 < a ≤ 0,6, 0 ≤ x ≤ 0,25, 0 ≤ y ≤ 0,25, 0 < z ≤ 0,25, 0 ≤ x+y+z < 0, 3, 0 < p ≤ 0,01, 0 ≤ q ≤ 0,01, et r = 1.

6. Procédé pour préparer la matière active de cathode selon l'une quelconque des revendications 1 à 5, comprenant les étapes de :
(a) mélange d'un précurseur contenant du nickel, du cobalt et du manganèse en même temps qu'un composé contenant du lithium, un composé contenant du fluor (F) et un composé contenant du phosphate (PO₄) ; et
(b) frittage du mélange obtenu dans l'étape (a) afin d'obtenir la matière active de cathode.

7. Procédé selon la revendication 6, dans lequel
le composé contenant du fluor est sélectionné à partir du groupe constitué par NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, polyfluorure de vinylidène, poly(fluorure de vinylidène-cohexafluoropropylène) et un mélange de ceux-ci ; et
le composé contenant du phosphate est sélectionné à partir du groupe constitué par NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, trioxyde de phosphore, pentoxyde de phosphore, et un mélange de ceux-ci.

8. Procédé selon la revendication 6 ou la revendication 7, dans lequel le frittage dans l'étape (b) est mené à 650 à 1 000 °C pendant 4 à 24 heures sous la condition de chauffage et de refroidissement pendant 3 à 8 heures chacun.

9. Procédé pour préparer la matière active de cathode selon l'une quelconque des revendications 1 à 5, comprenant les étapes de :
(a) mélange d'un précurseur contenant du nickel, du cobalt et du manganèse en même temps qu'un composé contenant du lithium et un composé contenant du fluor (F) ;
(b) frittage du mélange obtenu dans l'étape (a), suivi par mélangeage du mélange fritté avec un composé contenant du phosphate (PO₄) ou un composé contenant du fluorure de phosphate (PO₄F) ; et
(c) soumission du mélange obtenu dans l'étape (b) à un traitement thermique afin d'obtenir la matière active de cathode.

10. Procédé selon la revendication 9, dans lequel
le composé contenant du fluor est sélectionné à partir du groupe constitué par NH₄F, NH₄HF₂, NH₄PF₆, LiF, LiAlF₆, AlF₃, MgF₂, CaF₂, MnF₂, MnF₃, FeF₂, FeF₃, CoF₂, CoF₃, NiF₂, TiF₄, CuF, CuF₂, ZnF₂, polyfluorure de vinylidène, poly(fluorure de vinylidène-cohexafluoropropylène) et un mélange de ceux-ci ;
le composé contenant du phosphate est sélectionné à partir du groupe constitué par NH₄H₂PO₄, (NH₄)₂HPO₄, H₃PO₄, Li₃PO₄, LiH₂PO₄, MgHPO₄, Mg₃(PO₄)₂, Mg(H₂PO₄)₂, NH₄MgPO₄, AlPO₄, FePO₄, Zn₃(PO₄)₂, trioxyde de phosphore, pentoxyde de phosphore, et un mélange de ceux-ci ; et
le composé contenant du fluorure de phosphate est un sel métallique de PO₄F, le métal étant sélectionné à partir du groupe constitué par Ca, Mg, Al, Ti, Mn, Fe, Co, Ni, Cu, Zn, Y, Zr, Nb, B et une combinaison de ceux-ci.

11. Procédé selon la revendication 9 ou la revendication 10, dans lequel le mélange dans l'étape (b) est mené par un processus en milieu humide ou à sec.

12. Procédé selon la revendication 9 ou la revendication 10, dans lequel
le frittage dans l'étape (b) est mené à 650 à 1 000 °C pendant 4 à 24 heures sous la condition de chauffage et de refroidissement pendant 3 à 8 heures chacun ; et
le traitement thermique dans l'étape (c) est mené à 300 à 900 °C pendant 2 à 8 heures sous la condition de chauffage et de refroidissement pendant 1 à 6 heures chacun.

13. Batterie rechargeable au lithium comprenant une anode de lithium, un électrolyte et une cathode contenant la matière active de cathode selon l'une quelconque des revendications 1 à 5.
